# EUROPEAN PATENT APPLICATION

(11) **EP 4 748 460 A1**
(43) Date of publication of application: **27.05.2026**
(21) Application number: 25208564.2
(22) Date of filing: 14.10.2025
(51) Int. Cl.: A63F 13/213, A63F 13/426, A63F 13/55

(54) **COMPUTER-IMPLEMENTED METHOD, GAME SYSTEM, AND GAME PROGRAM**

(30) Priority: 26.11.2024 JP 2024205724
(71) Applicant: Nintendo Co., Ltd., Kyoto 601-8501 (JP)
(72) Inventor: IWASA, Yoshihiro, Kyoto, 601-8501 (JP)
(74) Representative: Bardehle Pagenberg Partnerschaft mbB Patentanwälte Rechtsanwälte

(57) **Abstract**

From a first controller held by a right hand of a user and having a first mouse sensor, first data including first mouse sensor data based on an output of the first mouse sensor is acquired. From a second controller held by a left hand of the user and having a second mouse sensor, second mouse sensor data based on an output of the second mouse sensor is acquired. A first virtual object is moved based on the first mouse sensor data. A second virtual object is moved based on the second mouse sensor data. At least one of the first and second virtual objects is moved to a position in which the first virtual object is located to the right of the second virtual object, thereby forming a first positional relationship, based on at least one of the first data or the second data.

## Description

### CROSS REFERENCE TO RELATED APPLICATION

This application claims priority to Japanese Patent Application No. 2024-205724 filed on November 26, 2024, the entire contents of which are incorporated herein by reference.

### FIELD

The present disclosure relates to game processing using a novel game controller.

### BACKGROUND AND SUMMARY

Conventionally, game controllers have been known.

There is room in providing a user with novel game processing using a controller having a mouse sensor.

In view of the above circumstances, configuration examples will be shown below.

### (Configuration 1)

A configuration 1 is a computer-implemented method comprising: acquiring, from a first controller configured to be held by a right hand of a user and having a first mouse sensor, first data including first mouse sensor data based on an output of the first mouse sensor; acquiring, from a second controller configured to be held by a left hand of the user and having a second mouse sensor, second data including second mouse sensor data based on an output of the second mouse sensor; moving a first virtual object, based on the first mouse sensor data; moving a second virtual object, based on the second mouse sensor data; and moving at least one of the first virtual object and the second virtual object to a position in which the first virtual object is located to the right of the second virtual object, thereby forming a first positional relationship, based on at least one of the first data or the second data.

### (Configuration 2)

In a configuration 2 based on the above configuration 1, at least one of the first controller and second controller may include at least one of a button or a direction input section, at least one of the first data or the second data may include button data based on the button being pressed or direction input section data based on the direction input section being operated, and at least one of the first virtual object and the second virtual object may be moved to the position that makes the first positional relationship, based on the button data or the direction input section data.

### (Configuration 3)

In a configuration 3 based on the above configuration 1 or 2, the computer-implemented method may include: switching between a first movement mode in which the first virtual object and the second virtual object are movable relative to each other, and a second movement mode in which the first virtual object and the second virtual object are moved while maintaining a second positional relationship between them, based on at least one of the first mouse sensor data and the second mouse sensor data.

### (Configuration 4)

In a configuration 4 based on the above configuration 3, the first positional relationship and the second positional relationship may be the same positional relationship.

### (Configuration 5)

In a configuration 5 based on the above configuration 3 or 4, the computer-implemented method may include calculating a movement amount of the first virtual object and the second virtual object in the second movement mode so that the movement amount becomes greater when calculated based on both of the first mouse sensor data and the second mouse sensor data than when calculated based on either the first mouse sensor data or the second mouse sensor data.

### (Configuration 6)

In a configuration 6 based on the above configuration 5, the computer-implemented method may include, in the second movement mode, calculating a movement direction and the movement amount of the first virtual object and the second virtual object as sums of those calculated respectively from the first mouse sensor data and the second mouse sensor data.

### (Configuration 7)

In a configuration 7 based on any one of the above configurations 3 to 6, in the first movement mode, each of the first virtual object and the second virtual object may be movable in a predetermined range with a predetermined position as a reference position.

### (Configuration 8)

In a configuration 8 based on any one of the above configurations 3 to 7, the computer-implemented method may include: in the first movement mode, deforming a predetermined area in accordance with a position of at least one of the first virtual object and the second virtual object; and in the second movement mode, moving the predetermined area together with the first virtual object and the second virtual object.

### (Configuration 9)

In a configuration 9 based on the above configuration 8, the computer-implemented method may include exerting a predetermined in-game effect when the predetermined area and a third virtual object are in a predetermined positional relationship.

### (Configuration 10)

In a configuration 10 based on any one of the above configurations 1 to 9, movement controls of the first virtual object and the second virtual object based on the first mouse sensor data and the second mouse sensor data may be temporarily restricted while at least one of the first virtual object and the second virtual object is being moved to the position that makes the first positional relationship.

### BRIEF DESCRIPTION OF THE DRAWINGS

FIG. 1 shows a non-limiting example of a state in which a left controller 3 and a right controller 4 are attached to a main body apparatus 2;
FIG. 2 shows a non-limiting example of a state in which the main body apparatus 2, and the left controller 3 and the right controller 4, are used separately from each other;
FIG. 3 is six orthogonal views showing a non-limiting example of the left controller 3;
FIG. 4 is six orthogonal views showing a non-limiting example of the right controller 4;
FIG. 5 is a block diagram showing a non-limiting example of the internal configuration of the main body apparatus 2;
FIG. 6 is a block diagram showing a non-limiting example of the internal configurations of the main body apparatus 2, the left controller 3, and the right controller 4;
FIG. 7 shows a non-limiting example of an operation manner for the controllers;
FIG. 8 shows a non-limiting example of a game screen;
FIG. 9 shows a non-limiting example of the orientations of the controllers;
FIG. 10 shows a non-limiting example of the way of moving the controllers;
FIG. 11 shows a non-limiting example of a game screen;
FIG. 12 shows a non-limiting example of a game screen;
FIG. 13 shows a non-limiting example of a game screen;
FIG. 14 shows a non-limiting example of a game screen;
FIG. 15 shows a non-limiting example of the orientations of the controllers;
FIG. 16 shows a non-limiting example of the way of moving the controllers;
FIG. 17 shows a non-limiting example of a game screen;
FIG. 18 shows a non-limiting example of a game screen;
FIG. 19 shows a non-limiting example of the way of moving the controllers;
FIG. 20 shows a non-limiting example of a game screen;
FIG. 21 shows a non-limiting example of a game screen;
FIG. 22 shows a non-limiting example of various data stored in a DRAM 85 of the main body apparatus 2;
FIG. 23 shows a non-limiting example of the data structure of operation data 615;
FIG. 24 is a non-limiting example of a flowchart showing the details of game processing;
FIG. 25 is a non-limiting example of a flowchart showing the details of a second movement mode process;
FIG. 26 is a non-limiting example of a flowchart showing the details of the second movement mode process; and
FIG. 27 is a non-limiting example of a flowchart showing the details of the second movement mode process.

### DETAILED DESCRIPTION OF NON-LIMITING EXAMPLE EMBODIMENTS

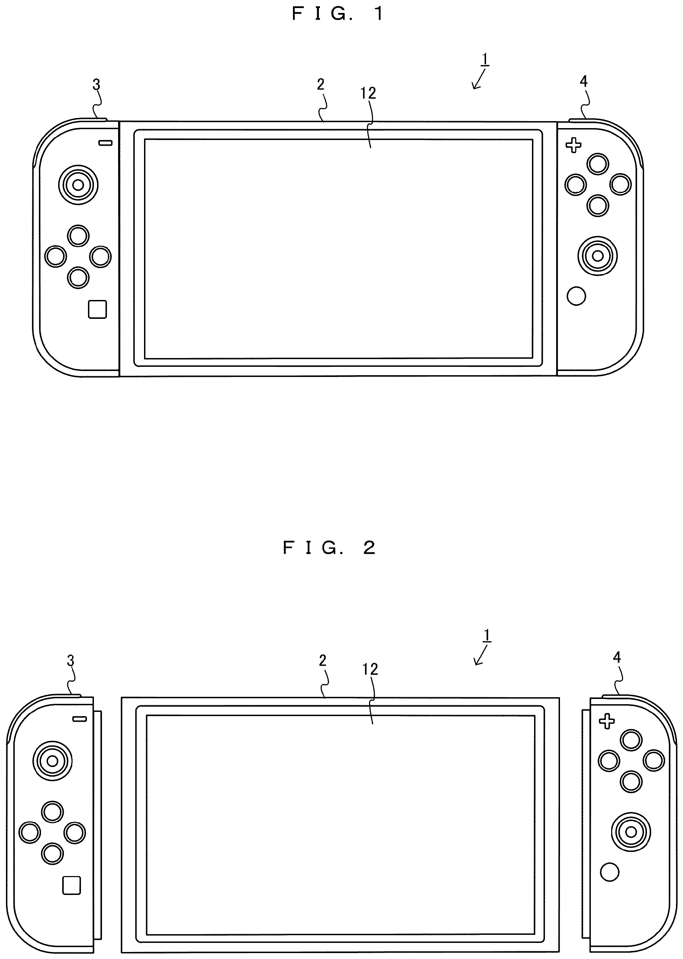

Hereinafter, an exemplary embodiment will be described. FIG. 1 shows an example of an outer appearance of a game system according to the exemplary embodiment. An example of a game system 1 according to the exemplary embodiment includes a main body apparatus (an information processing apparatus, which functions as a game apparatus main body in the exemplary embodiment) 2, a left controller 3, and a right controller 4. Each of the left controller 3 and the right controller 4 is attachable to and detachable from the main body apparatus 2. That is, as shown in FIG. 1, the game system 1 can be used as a unified apparatus obtained by attaching each of the left controller 3 and the right controller 4 to the main body apparatus 2. Further, as shown in FIG. 2, in the game system 1, the main body apparatus 2, the left controller 3, and the right controller 4 can also be used as separate bodies (see FIG. 2). Hereinafter, the left controller 3 and the right controller 4 may be collectively referred to as "controllers".

The main body apparatus 2 includes a display 12. The display 12 displays an image generated by the main body apparatus 2. The display 12 is a liquid crystal display (LCD), for example.

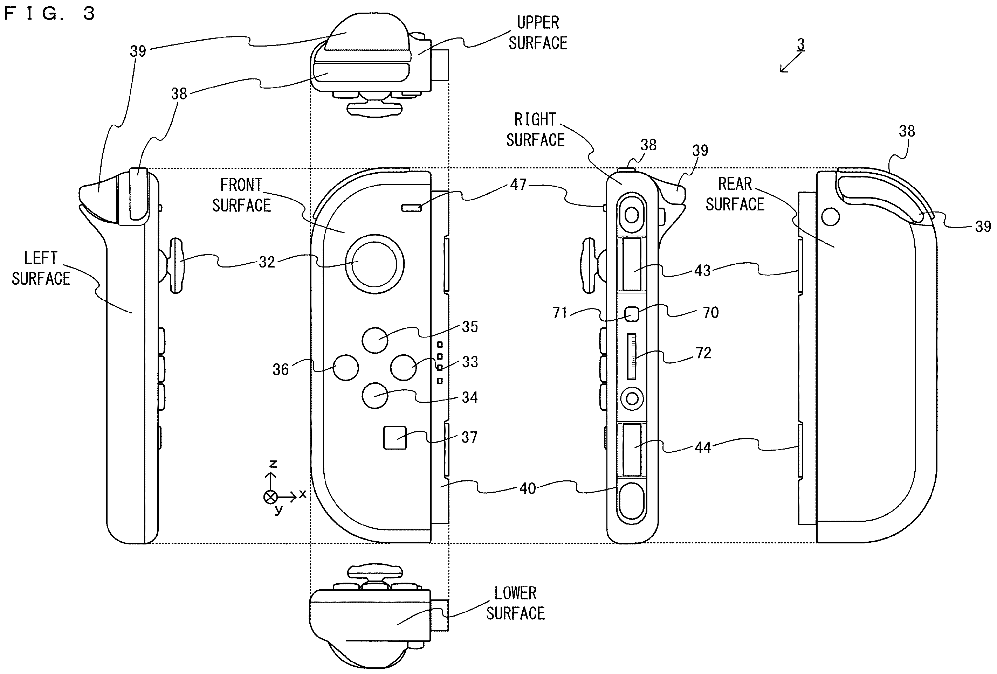

Next, the controllers will be described. FIG. 3 is six orthogonal views showing an example of the left controller 3. As shown in FIG. 3, the left controller 3 has a vertically long shape, i.e., a shape long in a z-axis direction shown in FIG. 3. The left controller 3 has a protruding portion 40 to be fitted into a recessed portion (not shown) of the main body apparatus 2, in a state of being attached to the main body apparatus 2. In the state in which the left controller 3 is detached from the main body apparatus 2, the left controller 3 can also be held in the orientation in which the left controller 3 is vertically long. The left controller 3 has such a shape and a size that, when held in the orientation in which the left controller 3 is vertically long, the left controller 3 can be held with one hand, particularly, the left hand. Further, the left controller 3 can also be held in the orientation in which the left controller 3 is horizontally long, and when held in the orientation in which the left controller 3 is horizontally long, the left controller 3 may be held with both hands.

The left controller 3 has a left analog stick (may be referred to as a "left stick") 32 as an example of a direction input device. As shown in FIG. 2, the left stick 32 is provided on a front surface of the left controller 3. The left stick 32 can be used as a direction input section with which a direction can be inputted. By tilting the left stick 32, the user can input a direction corresponding to the tilt direction and can input a magnitude corresponding to the angle of the tilt.

The left controller 3 has various operation buttons. The left controller 3 has a right direction button 33, a down direction button 34, an up direction button 35, a left direction button 36, a record button 37, and a "-" (minus) button 47, at the front surface. The left controller 3 has an L button 38 and a ZL button 39 over a range from the upper surface to the left surface. The L button 38 and the ZL button 39 may be provided at only the upper surface of the left controller 3, or may be provided only at the left surface of the left controller 3. The left controller 3 has a button 43 and a button 44 at the protruding portion 40 on the right surface.

The left controller 3 has a mouse sensor opening 70 at the protruding portion 40 on the right surface. The mouse sensor opening 70 is an opening through which light is guided to the mouse sensor 71 provided inside. The mouse sensor 71 is a general mouse sensor (e.g., an optical-type or laser-type mouse sensor), for example, and acquires data for calculating movement (movement direction, movement distance, movement speed, etc.), on a working surface, of the left controller 3 placed with the right surface (i.e., the upper surface of the protruding portion 40) facing the working surface.

The left controller 3 has, at the protruding portion 40 on the right surface, a terminal 72 for the left controller 3 to perform wired communication with the main body apparatus 2.

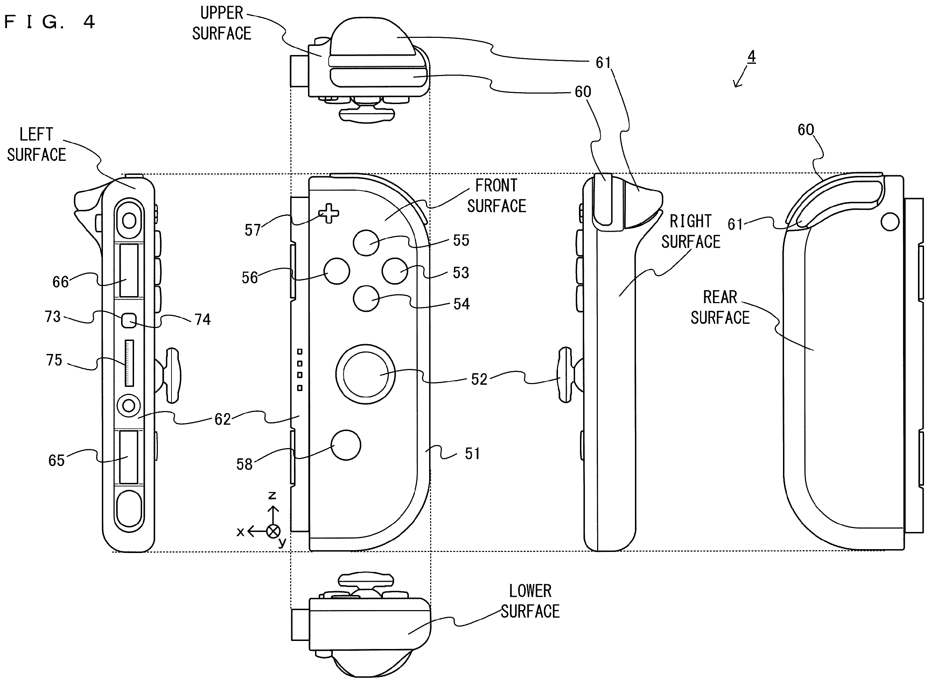

FIG. 4 is six orthogonal views showing an example of the right controller 4. As shown in FIG. 4, the right controller 4 has a vertically long shape, i.e., a shape long in a z-axis direction shown in FIG. 4. The right controller 4 has a protruding portion 62 to be fitted into a recessed portion (not shown) of the main body apparatus 2, in a state of being attached to the main body apparatus 2. In the state in which the right controller 4 is detached from the main body apparatus 2, the right controller 4 can also be held in the orientation in which the right controller 4 is vertically long. The right controller 4 has such a shape and a size that, when held in the orientation in which the right controller 4 is vertically long, the right controller 4 can be held with one hand, particularly, the right hand. Further, the right controller 4 can also be held in the orientation in which the right controller 4 is horizontally long, and when held in the orientation in which the right controller 4 is horizontally long, the right controller 4 may be held with both hands.

The right controller 4 has a right analog stick (may be referred to as "right stick") 52 as a direction input section, at the front surface. In the exemplary embodiment, the right stick 52 has the same configuration as the left stick 32 of the left controller 3. The right controller 4 has various operation buttons. The right controller 4 has an A button 53, a B button 54, an X button 55, a Y button 56, a "+" (plus) button 57, and a home button 58 at the front surface. The right controller 4 has an R button 60 and a ZR button 61 over a range from the upper surface to the right surface. The R button 60 and the ZR button 61 may be provided at only the upper surface of the right controller 4. The right controller 4 has a button 65 and a button 66 at the protruding portion 62 on the left surface.

The right controller 4 has a mouse sensor opening 73 at the protruding portion 62 on the left surface. The mouse sensor opening 73 is an opening through which light is guided to a mouse sensor 74 provided inside. The mouse sensor 74 is a general mouse sensor (e.g., an optical-type or laser-type mouse sensor), for example, and acquires data for calculating movement (movement direction, movement distance, movement speed, etc.), on a working surface, of the right controller 4 placed with the left surface (i.e., the upper surface of the protruding portion 62) facing the working surface.

The right controller 4 has, at the protruding portion 62 on the left surface, a terminal 75 for the right controller 4 to perform wired communication with the main body apparatus 2.

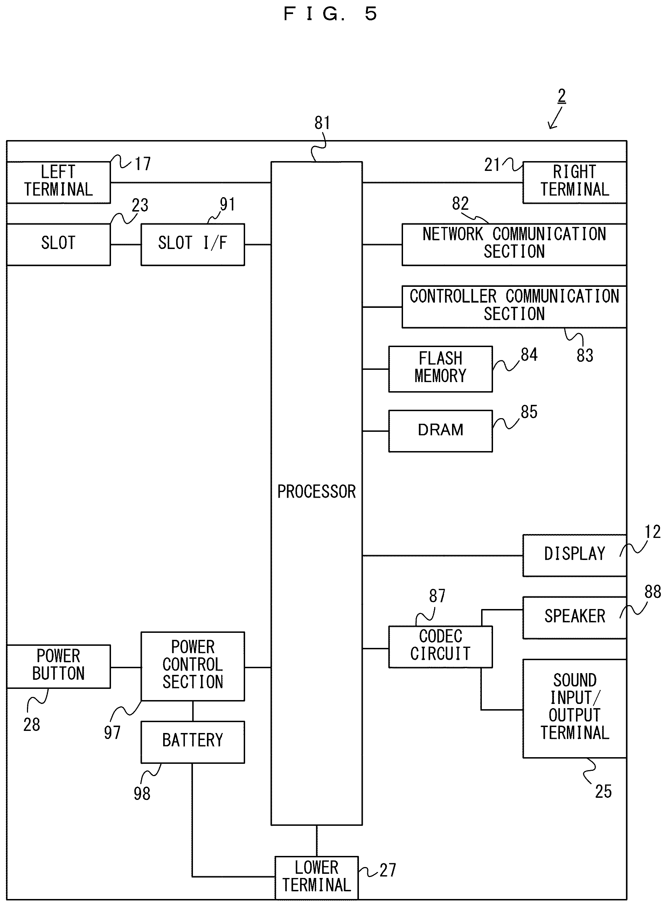

FIG. 5 is a block diagram showing an example of the internal configuration of the main body apparatus 2. The main body apparatus 2 includes a processor 81. The processor 81 is an information processing section for executing various types of information processing to be executed by the main body apparatus 2. For example, the processor 81 may be composed of one or more CPUs (Central Processing Units), or may be composed of a SoC (System-on-a-chip) having a plurality of functions such as a CPU function and a GPU (Graphics Processing Unit) function. The processor 81 executes an information processing program (e.g., a game program) stored in a storage section (specifically, an internal storage medium such as a flash memory 84, an external storage medium attached to a slot 23, or the like), thereby executing the various types of information processing.

The main body apparatus 2 includes the flash memory 84 and a DRAM (Dynamic Random Access Memory) 85 as examples of internal storage media. The flash memory 84 is a memory mainly used to store various data (or programs) to be saved in the main body apparatus 2. The DRAM 85 is a memory used to temporarily store various data used for information processing. The processor 81 appropriately reads and writes data from and to storage media such as the flash memory 84 and the DRAM 85, thereby executing various information processes.

The main body apparatus 2 includes various components, as shown in FIG. 5. These will be briefly described below. A slot interface (may be referred to as "slot I/F") 91 performs reading/writing of data from/into a predetermined kind of storage medium (e.g., a dedicated memory card) attached to the slot 23, in accordance with an instruction from the processor 81. A network communication section 82 performs communication (e.g., Internet communication) with an external device via a network.

The controller communication section 83 performs wireless communication (e.g., communication compliant with the standard of Bluetooth (registered trademark)) with the left controller 3 and/or the right controller 4. A left terminal 17 is a terminal for performing data communication between the processor 81 and the left controller 3. A right terminal 21 is a terminal for performing data communication between the processor 81 and the right controller 4. A lower terminal 27 is a terminal for outputting data (e.g., image data and sound data) to a stationary monitor or the like via a cradle when the lower terminal 27 is attached to the cradle.

The display 12 displays an image generated by the processor 81 and/or an image acquired from the outside. A codec circuit 87 controls input and output of sound data to and from the speaker 88 and the sound input/output terminal25. A power control section 97 controls supply of power from a battery 98 to each section of the main body apparatus 2 (i.e., each of sections to be supplied with power from the battery 98), based on an instruction from the processor 81, and starts or stops supply of power in response to pressing of a power button 28.

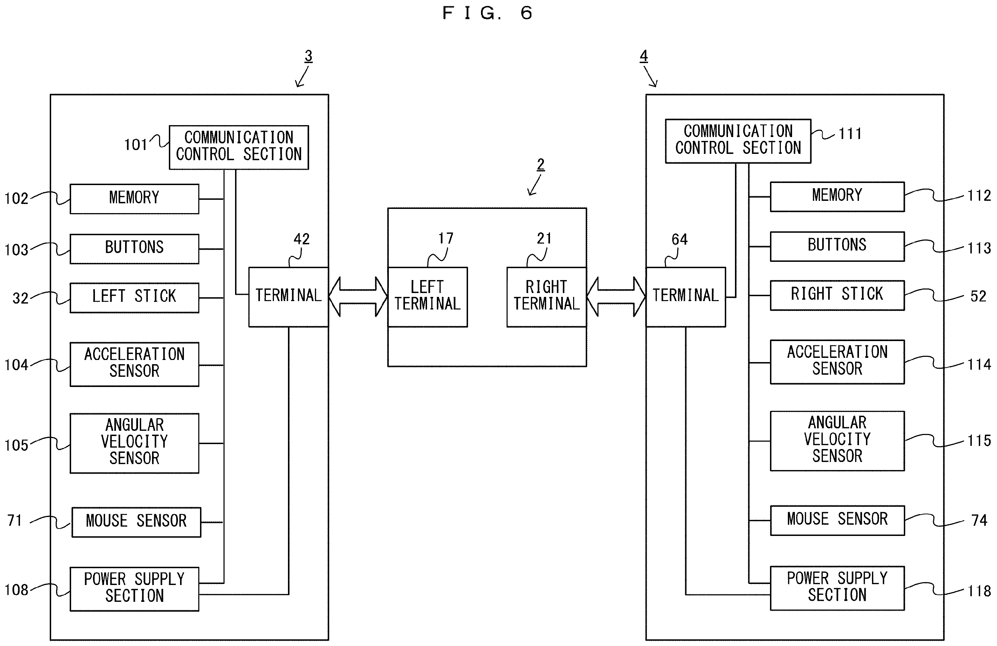

FIG. 6 is a block diagram showing examples of the internal configurations of the main body apparatus 2, the left controller 3, and the right controller 4. The details of the internal configuration of the main body apparatus 2 are shown in FIG. 5 and therefore are omitted in FIG. 6.

The left controller 3 includes a communication control section 101 which performs communication with the main body apparatus 2. As shown in FIG. 6, the communication control section 101 is connected to various components including a terminal 42. In a state in which the left controller 3 is attached to the main body apparatus 2, the communication control section 101 performs communication with the main body apparatus 2 via the terminal 42, and in a state in which the left controller 3 is detached from the main body apparatus 2, the communication control section 101 performs wireless communication with the main body apparatus 2.

The left controller 3 includes a memory 102 such as a flash memory. The communication control section 101 includes, for example, a microcomputer (or a microprocessor) and executes firmware stored in the memory 102, thereby executing various processes.

The left controller 3 has buttons 103 (right direction button 33, down direction button 34, up direction button 35, left direction button 36, L button 38, ZL button 39, etc.) and the left stick 32. Each of the buttons 103 and the left stick 32 outputs information regarding an operation performed on itself to the communication control section 101 repeatedly at appropriate timings.

The left controller 3 includes inertial sensors. Specifically, the left controller 3 includes an acceleration sensor 104 and an angular velocity sensor 105. In the exemplary embodiment, the acceleration sensor 104 detects the magnitudes of accelerations along predetermined three axial (e.g., x, y, z axes shown in FIG. 2) directions. The acceleration sensor 104 may detect an acceleration along one axial direction or accelerations along two axial directions. In the exemplary embodiment, the angular velocity sensor 105 detects angular velocities about predetermined three axes (e.g., the x, y, z axes shown in FIG. 2). The angular velocity sensor 105 may detect an angular velocity about one axis or angular velocities about two axes. Each of the acceleration sensor 104 and the angular velocity sensor 105 is connected to the communication control section 101. Then, the detection results of the acceleration sensor 104 and the angular velocity sensor 105 are outputted to the communication control section 101 repeatedly at appropriate timings.

The left controller 3 has the mouse sensor 71. The mouse sensor 71 acquires data for calculating movement (movement direction, movement distance, movement speed, etc.) of the left controller 3 on a working surface. The data acquired by the mouse sensor 71 is outputted to the communication control section 101 repeatedly at appropriate timings.

The communication control section 101 acquires information regarding an input (specifically, information regarding an operation or the detection result of the sensor) from each of input sections (specifically, the buttons 103, the left stick 32, and the sensors 104, 105, and 71). The communication control section 101 transmits operation data including the acquired information or information obtained by performing predetermined processing on the acquired information, to the main body apparatus 2. The operation data is transmitted repeatedly, once every predetermined time.

The above operation data is transmitted to the main body apparatus 2, whereby the main body apparatus 2 can obtain inputs provided to the left controller 3. That is, the main body apparatus 2 can determine operations performed on the buttons 103 and the left stick 32, based on the operation data. Further, the main body apparatus 2 can calculate information regarding at least one of the motion or the orientation of the left controller 3 based on the operation data (specifically, the detection results of the acceleration sensor 104 and the angular velocity sensor 105). The main body apparatus 2 can calculate information about a mouse operation performed on the left controller 3, based on operation data (specifically, a detection result from the mouse sensor 71). Various kinds of determinations regarding the state of the left controller 3 may be executed. For example, the main body apparatus 2 may execute determination as to whether or not the mouse sensor opening 70 is in a state of contacting with the working surface or a state close to a state of contacting with the working surface, based on corresponding data transmitted from the communication control section 101. Such calculation and determination may be executed by system software of the main body apparatus 2, may be executed by a game application, or may be executed by a controller, for example.

The left controller 3 includes a power supply section 108. The power supply section 108 includes a battery and a power control circuit. The power control circuit is connected to the battery and also connected to components of the left controller 3 (specifically, components that receive power supplied from the battery).

As shown in FIG. 6, the right controller 4 includes a communication control section 111 which performs communication with the main body apparatus 2. Further, the right controller 4 includes a memory 112, which is connected to the communication control section 111. The communication control section 111 is connected to components including the terminal 64. The communication control section 111 and the memory 112 have functions similar to those of the communication control section 101 and the memory 102, respectively, of the left controller 3. Thus, the communication control section 111 can communicate with the main body apparatus 2 through both wired communication via the terminal 64 and wireless communication not via the terminal 64 (specifically, communication compliant with the Bluetooth (registered trademark) standard). The communication control section 111 controls communication performed by the right controller 4 with the main body apparatus 2.

The right controller 4 has input sections similar to those of the left controller 3. Specifically, the right controller 4 has buttons 113 (A button 53, B button 54, X button 55, Y button 56, R button 60, ZR button 61, etc.), the right stick 52, inertial sensors (an inertial sensor 114 and an angular velocity sensor 115), and the mouse sensor 74. These input sections may have the same functions as those of the left controller 3, and may operate in the same manner.

### [Outline of Game Processing in Exemplary Embodiment]

Next, the outline of operation of game processing executed by the game system 1 according to the exemplary embodiment will be described. In the exemplary embodiment, it is assumed that a game is played in a state in which the main body apparatus 2 alone, from which the left controller 3 and the right controller 4 are detached, is attached to the cradle and the main body apparatus 2 outputs a game image to a stationary monitor or the like via the cradle, as an example.

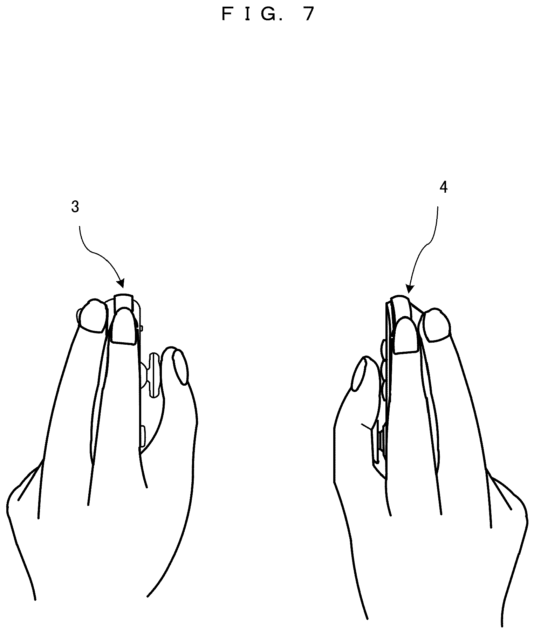

Here, an operation method for the controllers assumed in the exemplary embodiment will be described. In the exemplary embodiment, the controllers are used as mice using the mouse sensor 71 and the mouse sensor 74. FIG. 7 shows an example of an operation method assumed in the exemplary embodiment. As shown in FIG. 7, in the exemplary embodiment, each of the left and right controllers is operated while being placed such that the surface where the mouse sensor opening is present is in contact with the working surface. Hereinafter, an operation of each controller placed in such a manner as shown in FIG. 7 is referred to as "mouse operation". An operation of moving each controller on the working surface is referred to as "mouse movement operation".

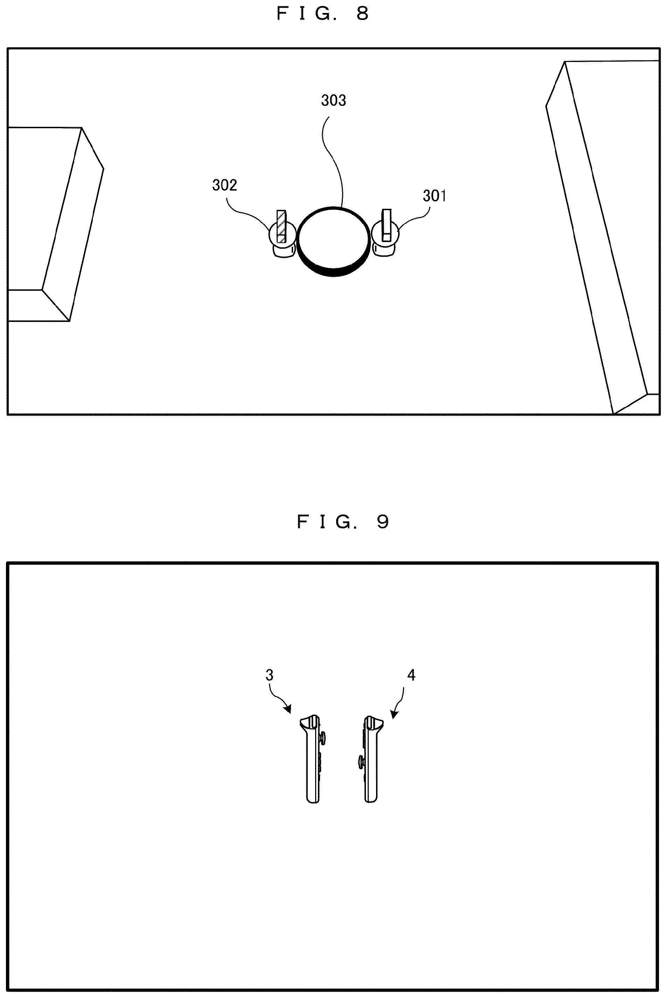

Next, the game (hereinafter, this game) assumed in the exemplary embodiment will be described. This game is a game in which two virtual objects holding a virtual trampoline are moved. FIG. 8 shows a screen example in this game. In FIG. 8, a game image as a fixed screen as seen when looking down obliquely from above in a three-dimensional virtual space, is shown. In FIG. 8, a first virtual object 301, a second virtual object 302, and a virtual trampoline object (hereinafter, simply referred to as trampoline) 302 are displayed. The first virtual object 301 is subjected to action control based on an output from the right controller 4. The second virtual object 302 is subjected to action control based on an output from the left controller 3. Hereinafter, for facilitating description, the first virtual object is referred to as "right OBJ", and the second virtual object is referred to as "left OBJ". In the following description, the right OBJ 301, the left OBJ 302, and the trampoline 303 may be collectively referred to as "player object group".

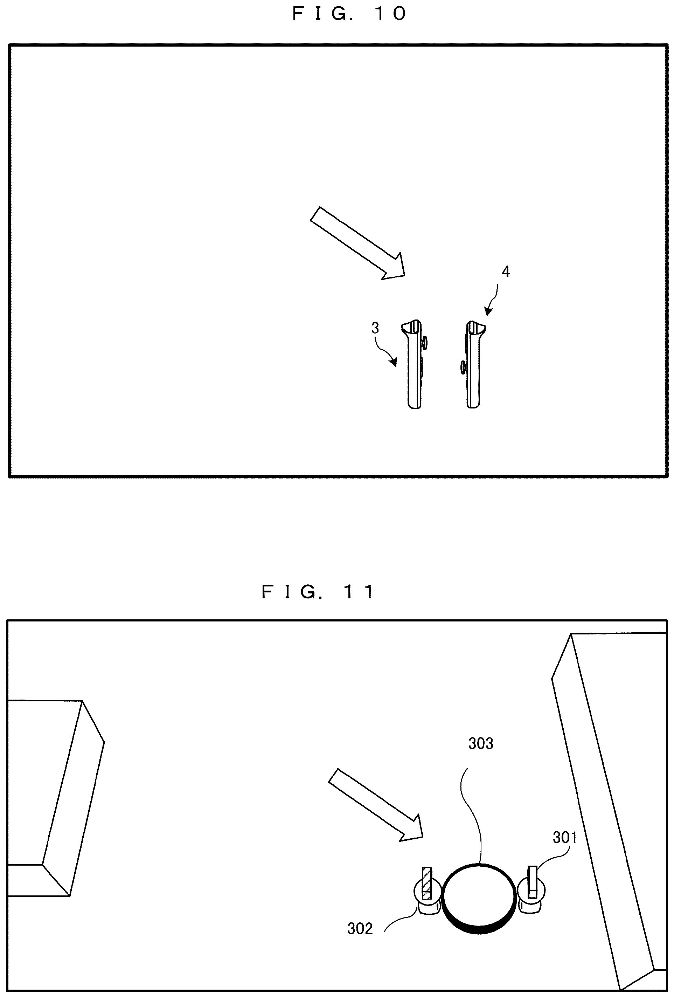

In FIG. 8, a state in which ends of the trampoline 303 are lifted by the right OBJ 301 and the left OBJ 302 is shown. The user can move the right OBJ 301 and the left OBJ 302 holding the trampoline 303, by performing mouse movement operations of the controllers. FIG. 9 shows an example of the orientations of the controllers on the working surface in the state shown FIG. 8. In this state, for example, when the user moves the controllers together on the working surface in the lower right direction as shown in FIG. 10, the player object group moves in the lower right direction as shown in FIG. 11.

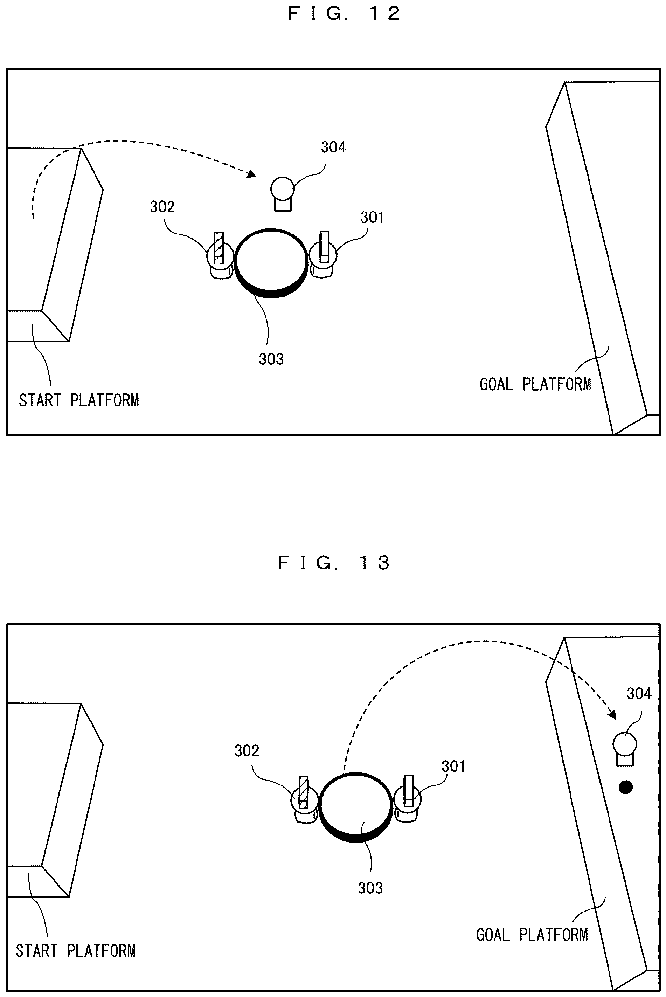

Next, more specific game contents will be described. FIG. 12 and FIG. 13 show other examples of game images in this game. In this game, as shown in FIG. 12, a third object 304 appears from a "start platform" on the left side of the screen, and jumps toward the right side of the screen. The user moves the player object group so that the third object 304 is received by the trampoline 303. If the third object 304 is successfully received, as shown in FIG. 13, the third object 304 can bounce on the trampoline 303 and can land on a "goal platform" on the right side of the screen. That is, this game is a game in which the third object 304 jumping from the start platform is received by the trampoline 303 and caused to jump so as to land on the goal platform. When the third object 304 has successfully landed, a score is added. On the other hand, if the third object 304 fails to be received, the third object 304 collides with the ground and disappears. In this case, no score is obtained.

Here, movement control of the player object group will be described. In this game, a relative movement mode which is a first movement mode and a simultaneous movement mode which is a second movement mode can be used while being switched therebetween. In this example, regarding a switchover operation therebetween, the relative movement mode is used in a state in which at least one of the L button 38 or the R button 60 is being pressed, and the simultaneous movement mode is used in a state in which both buttons are not being pressed.

Here, the simultaneous movement mode will be described first, while the relative movement mode is described later. The simultaneous movement mode is a mode in which movement can be performed in the movement manner as shown in FIG. 8 and FIG. 11. That is, in this mode, movement can be performed while keeping the positional relationship among the right OBJ 301, the left OBJ 302, and the trampoline 303. Operation examples in this mode will be described. In the simultaneous movement mode, as shown in FIG. 9 and FIG. 10, the right controller 4 and the left controller 3 are simultaneously moved, whereby the player object group can be moved. It is also possible to move the player object group by only one of the controllers. For example, in a case of moving the player object group in the lower right direction as shown in FIG. 11, the movement can be performed by moving only the right controller 4 in the lower right direction or can be performed by moving only the left controller 3 in the lower right direction. Between a case of operating only one of the controllers and a case of simultaneously operating both controllers, the movement amount of the player object group per unit time is different. Specifically, in this game, in the second movement mode, the movement amount of each controller is calculated, and the sum of the movement amounts is used as the movement amount of the player object group. For example, in a case where the right controller 4 is moved in the lower right direction by an amount of "3" and the left controller 3 is not moved, the player object group is moved in the lower right direction by an amount of "3". The same applies to a case of moving only the left controller 3 in the same manner. On the other hand, in a case where the left controller 3 and the right controller 4 are both moved in the lower right direction by an amount of "3", the movement amounts of the controllers are summed, so that the player object group is moved in the lower right direction by an amount of "6". That is, the trampoline 303 can be moved more greatly (faster) by an operation using both hands than by an operation using one hand.

In the simultaneous movement mode, if the controllers are respectively moved leftward and rightward in opposite directions by amounts approximately equal to each other, the leftward and rightward movement amounts are canceled out with each other, so that the movement amount can become 0.

Next, the relative movement mode will be described. In the relative movement mode, the right OBJ 301 and the left OBJ 302 can be individually moved by the respective left and right controllers. However, the movable range of each object is limited to a certain extent. For example, the movable range is a circular area having a predetermined radius centered at the position (hereinafter, movable reference position) of each of the left and right objects when the mode is switched to the relative movement mode. In addition, the movable reference position may be a left or right end of the trampoline 303 when the mode is switched to the relative movement mode, for example. In this case, for the right OBJ 301, the right end of the trampoline 303 is a movable reference position, and for the left OBJ 302, the left end of the trampoline 303 is a movable reference position. By setting the movable ranges as described above, it is possible to suppress occurrence of confusion in operations, for example. Also, such setting leads to motivation to move the player object group using the simultaneous movement mode, for example.

That is, in the simultaneous movement mode, the player object group can be integrally moved while keeping the positional relationship as shown in FIG. 8 and FIG. 11. On the other hand, in the relative movement mode, the right OBJ 301 and the left OBJ 302 can be individually moved in the movable ranges through the respective left and right mouse operations. However, the trampoline 303 itself does not move as a whole and end parts of the trampoline 303 are pulled by the right OBJ 301 and the left OBJ 302, whereby the shape of the trampoline 303 can be changed. In other words, the relative movement mode can be said to be a mode in which the shape of the trampoline 303 can be changed.

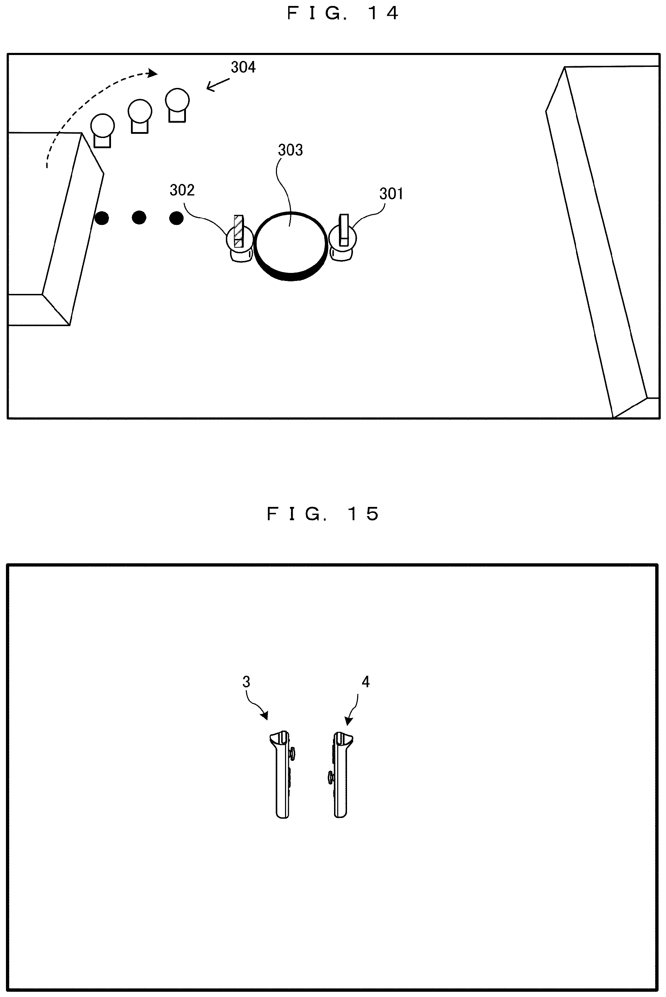

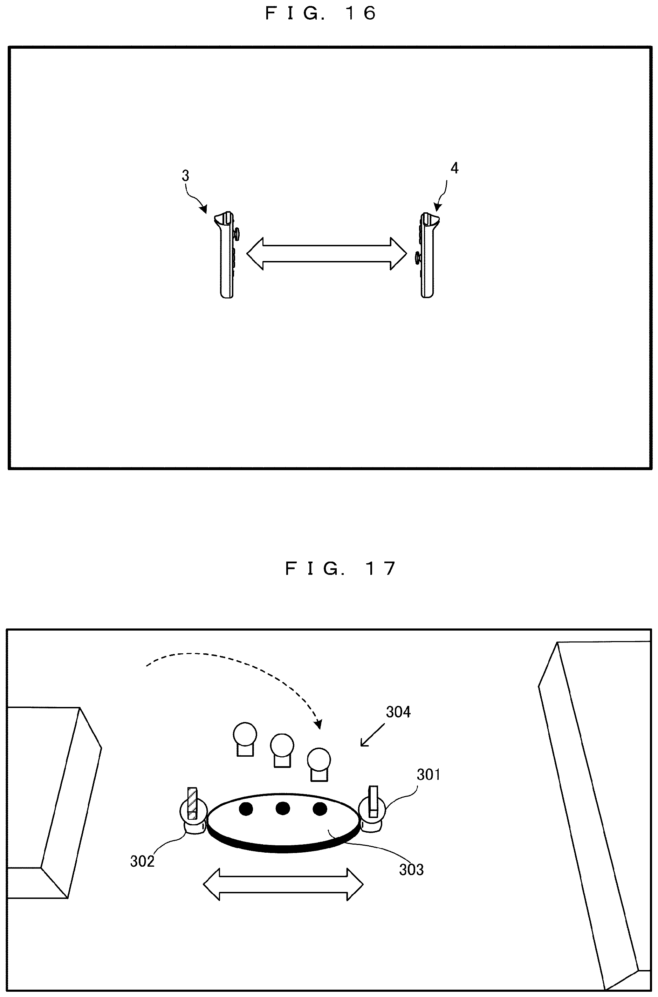

FIG. 14 to FIG. 21 show game image examples and controller orientation examples in a case of performing operations using the relative movement mode. In FIG. 14, a scene in which three third objects 304 come jumping in series is shown. FIG. 15 shows the orientations of the controllers at this time. In this case, if the trampoline 303 remains having a shape as shown in FIG. 14, the three objects cannot be received at one time. Therefore, the user performs an operation for switching to the relative movement mode, i.e., moves the right controller 4 in the right direction and the left controller 3 in the left direction as shown in FIG. 16, for example, whereby the trampoline 303 can be deformed into a shape stretched horizontally as shown in FIG. 17. Thus, the three third objects 304 are successfully received.

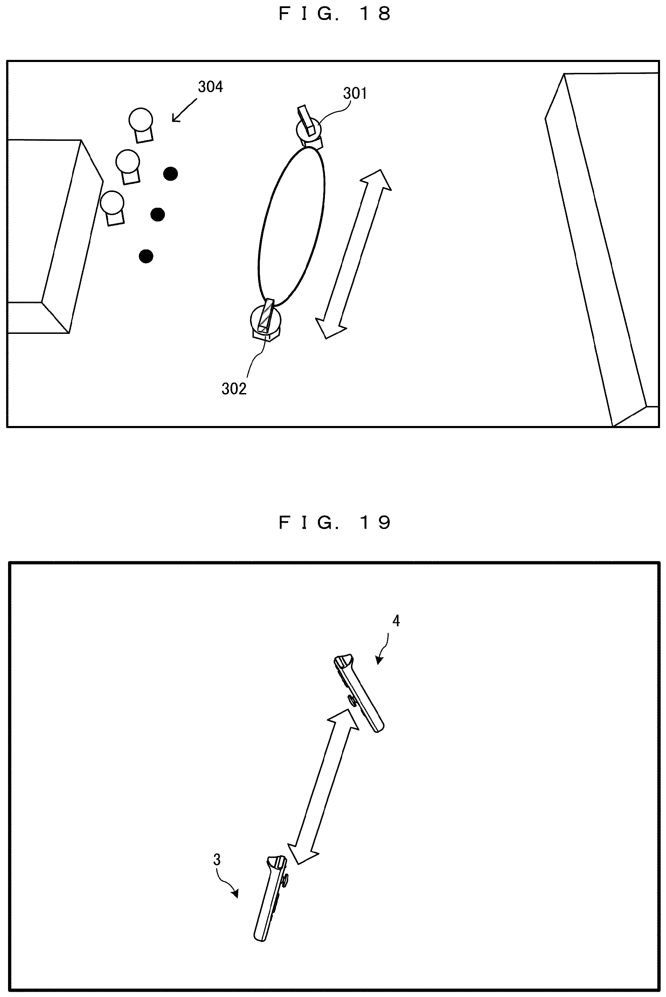

In the relative movement mode, since the right OBJ 301 and the left OBJ 302 can be each moved in the movable range, instead of deformation shown in FIG. 17, deformation of stretching in the vertical direction of the screen is also possible as shown in FIG. 18, for example. FIG. 19 shows an example of the orientations of the controllers at this time. Here, in FIG. 18, the orientations (directions) of the left OBJ 302 and the right OBJ 301 are also changed as compared to FIG. 17. This is because the orientations of the controllers detected based on outputs of the inertial sensors are reflected. Therefore, the orientations of the left OBJ 302 and the right OBJ 301 in FIG. 18 are similar to the orientations of the respective controllers in FIG. 19. Reflection of the orientations is performed also in the simultaneous movement mode. As described above, the directions of the controllers are indicated by the left OBJ 302 and the right OBJ 301, whereby the user who is keeping eyes on the display is allowed to easily recognize the directions of the controllers. In addition, unity between actual movement when each controller is moved and movement on the game screen is improved, leading to improvement in operability.

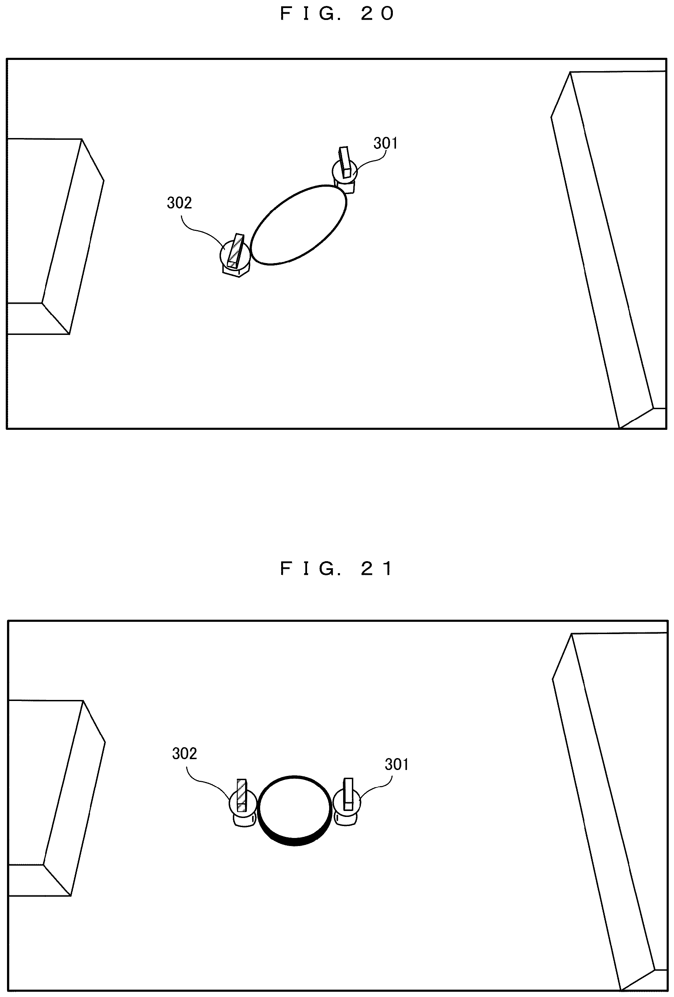

Next, control in switching from the relative movement mode to the simultaneous movement mode will be described. For example, in a state in which the trampoline 303 is changed into the shape shown in FIG. 18, operation when a finger is taken off the L button 38 or the R button 60 (hereinafter, may be collectively referred to as L/R button) will be described. In this case, as shown in FIG. 20 and FIG. 21, a scene in which the left OBJ 302 and the right OBJ 301 move so that their positional relationship becomes an "initial positional relationship" is displayed over a predetermined time of about several tens of frames. The initial positional relationship is such a positional relationship that the right OBJ 301 is at a position of 90° and the left OBJ 302 is at a position of 270°, where the upper end of the trampoline 303 having a circular shape as shown in FIG. 21 is defined as 0°. In other words, this is a positional relationship in which the right OBJ 301 is located on the right side relative to the left OBJ 302. Along with change in the positional relationship, the shape of the deformed trampoline 303 returns to the shape shown in FIG. 21. Hereinafter, the shape of the trampoline 303 in the initial positional relationship shown in FIG. 21 is referred to as a basic shape. That is, when the mode is switched from the relative movement mode to the simultaneous movement mode, the positional relationship between the right OBJ 301 and the left OBJ 302 is reset to the initial positional relationship, and the shape of the trampoline 303 is also reset.

In the exemplary embodiment, it is assumed that the positional relationship among the left OBJ 302, the right OBJ 301, and the trampoline 303 in the above initial positional relationship is the same as the positional relationship (see FIG. 8, etc.) among the left OBJ 302, the right OBJ 301, and the trampoline 303 in the simultaneous movement mode. In other words, the positional relationship kept when the player object group is moved in the simultaneous movement mode is the same as the initial positional relationship. In this regard, in another exemplary embodiment, the initial positional relationship and the positional relationship among the elements of the player object group in the simultaneous movement mode may be different from each other.

**In** the exemplary embodiment, the position (hereinafter, initial reference position) of the player object group when having returned to the initial positional relationship is set such that the center position of the trampoline 303 when a switchover operation is performed becomes the center of the player object group when having returned to the initial positional relationship, as an example. That is, when an operation of switching from the relative movement mode to the simultaneous movement mode is performed, the trampoline 303 is deformed into the basic shape so that the center position of the trampoline 303 when the switchover operation is performed becomes the center point of the basic shape, and movement control is automatically performed so that the right OBJ 301 comes to the right side and the left OBJ 302 comes to the left side. Hereinafter, a series of actions to reach the initial positional relationship is referred to as "reset action".

In this game, the "reset action" as described above is displayed over a predetermined time of about several tens of frames, for example. During the "reset action", at least an operation based on the mouse sensor of each controller is not accepted. That is, as the "reset action", automatic movements of the objects to reach the initial positional relationship is reproduced as an animation over several tens of frames, and during this period, mouse operations are not accepted. Returning to the fixed initial positional relationship as described above is likely to encourage the user to bring back the positional relationship between the two controllers to the original positional relationship. Along with the "reset action", the user might move the controllers so as to return the positions of the controllers to the initial positional relationship, but it is possible to prevent such a situation that, through such movement operations, the positions of the left OBJ 302 and the right OBJ 301 are shifted from the positions in the initial positional relationship and further the correspondence relationship between the positions of the left OBJ 302 and the right OBJ 301 and the actual positions of the controllers is shifted.

### [Usage Data Example]

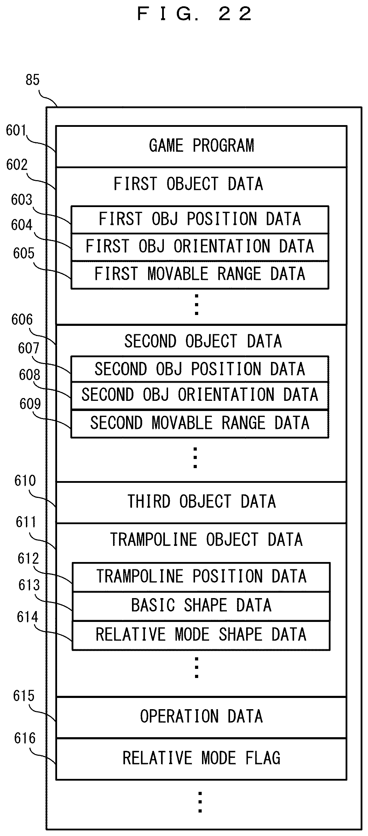

Next, various data used in the processing in the exemplary embodiment will be described. FIG. 22 is a memory map showing an example of various data stored in the DRAM 85 of the main body apparatus 2. In the DRAM 85, a game program 601, first object data 602, second object data 606, third object data 610, trampoline object data 611, operation data 615, a first mode flag 616, and the like, are stored.

The game program 601 is a program for executing the game processing according to the exemplary embodiment.

The first object data 602 is data about the right OBJ 301. The first object data 602 includes at least first OBJ position data 603, first OBJ orientation data 604, and first movable range data 605. The first OBJ position data 603 is data indicating the present position of the right OBJ 301. The first OBJ orientation data 604 is data indicating the present orientation of the right OBJ 301. The first movable range data 605 is data indicating the movable range (hereinafter, first movable range) of the right OBJ 301 in the first movement mode. In addition, the first object data 602 includes data indicating the outer appearance of the right OBJ 301, and the like, although not shown.

The second object data 606 is data about the left OBJ 302. The second object data 606 includes at least second OBJ position data 607, second OBJ orientation data 608, and second movable range data 609. The second OBJ position data 607 is data indicating the present position of the left OBJ 302. The second OBJ orientation data 608 is data indicating the present orientation of the left OBJ 302. The second movable range data 609 is data indicating the movable range (hereinafter, second movable range) of the left OBJ 302 in the first movement mode. In addition, the second object data 606 includes data indicating the outer appearance of the left OBJ 302, and the like, although not shown.

The third object data 610 is data about the third object described above. The third object data 610 includes data indicating the outer appearance of the third object, data defining an appearing pattern and an action pattern, and the like.

The trampoline object data 611 is data about the trampoline 303. The trampoline object data 611 includes at least trampoline position data 612, basic shape data 613, and first mode shape data 614. The trampoline position data 612 is data indicating the present position of the trampoline 303. The basic shape data 613 is data defining the basic shape. The relative mode shape data 614 is data indicating the present shape of the trampoline 303 in the relative movement mode.

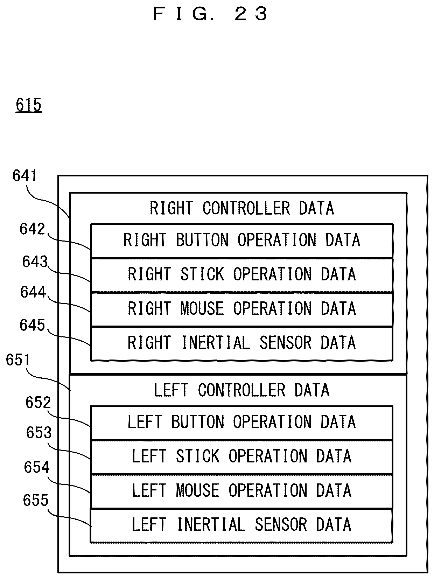

The operation data 615 is data indicating the contents of operations performed on the controllers. FIG. 23 shows an example of the data structure of the operation data 615. The operation data 615 includes right controller data 641 and left controller data 651.

The right controller data 641 includes right button operation data 642, right stick operation data 643, right mouse operation data 644, and right inertial sensor data 645. The right button operation data 642 is data indicating the press state of each button 113 of the right controller 4. The right stick operation data 643 is data indicating the input direction, the input amount, and the like of the right stick 52. The right mouse operation data 644 is data indicating a detection result from the mouse sensor 74 of the right controller 4. The right mouse operation data 644 may be data indicating movement amounts in an x-axis direction and a y-axis direction, or position coordinates (x, y) on a virtual mouse plane, for example. The right inertial sensor data 645 is data indicating detection results from the acceleration sensor 114 and the angular velocity sensor 115. For example, the right inertial sensor data 645 may be acceleration data and angular velocity data on three axes.

The left controller data 651 includes left button operation data 652, left stick operation data 653, left mouse operation data 654, and left inertial sensor data 655. The left button operation data 652 is data indicating the press state of each button 103 of the left controller 3. The left stick operation data 653 is data indicating the input direction, the input amount, and the like of the left stick 32. The left mouse operation data 654 is data indicating a detection result from the mouse sensor 71 of the left controller 3. The left inertial sensor data 655 is data indicating detection results from the acceleration sensor 104 and the angular velocity sensor 105.

Returning to FIG. 22, the relative mode flag 616 is a flag for determining whether the present movement mode is the relative movement mode or the simultaneous movement mode. When the present movement mode is the relative movement mode, the relative mode flag 616 is set at ON. The initial value is set at OFF.

### [Flowchart Example]

Next, examples of flowcharts of this game processing will be described. In the exemplary embodiment, one or more processors read and execute programs stored in one or more memories, whereby the flowcharts described below are implemented. The flowcharts are merely examples of processing procedures. Therefore, the processing order of steps may be changed as long as the same result is obtained. In addition, values of variables and thresholds used in determination steps are also merely examples, and other values may be employed as necessary.

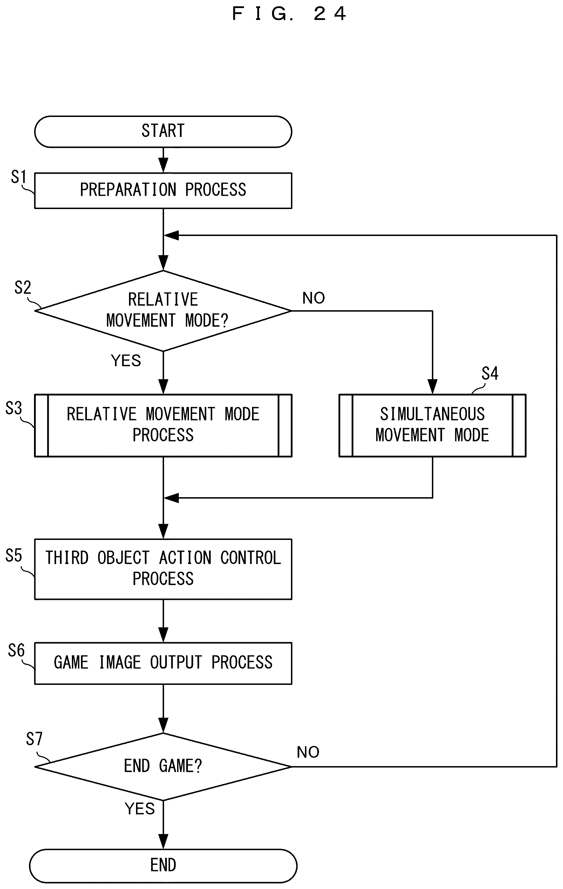

FIG. 24 is a flowchart showing the details of an example of the game processing according to the exemplary embodiment. A processing loop from step S1 to step S7 in FIG. 24 is repeated a plurality of times for one second in accordance with the frame rate.

When the game processing is started, first, a preparation process is executed (step S1). In this process, processing of constructing a virtual space as shown in FIG. 8 and the like and placing a player object group at a predetermined position defined as an initial placement position, is executed. Then, an image obtained by a virtual camera capturing the virtual space is outputted as a game image, and game play is started. Then, the process proceeds to step S2.

Next, whether the present mode is the relative movement mode or the simultaneous movement mode is determined based on the relative mode flag 616 (step S2). As a result of the determination, in a case of the relative movement mode (YES in step S2), a relative movement mode process is executed (step S3). On the other hand, in a case of the simultaneous movement mode (NO in step S2), a simultaneous movement mode process is executed. Since the initial value of the relative mode flag 616 is set at OFF, here, the simultaneous movement mode process will be described first.

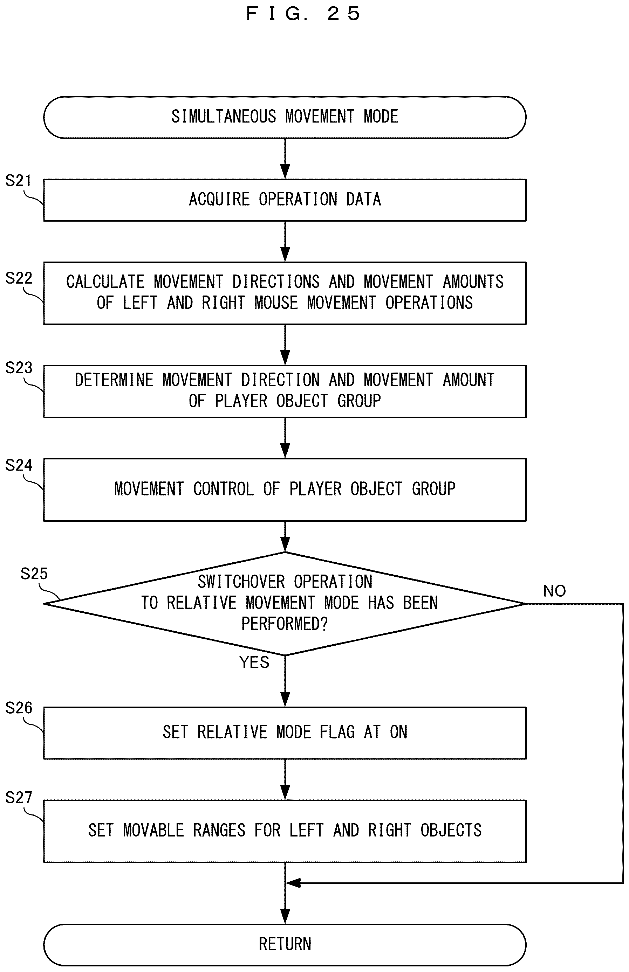

FIG. 25 is a flowchart showing the details of the simultaneous movement mode process. In FIG. 25, first, the operation data 615 is acquired (step S21).

Next, the contents of mouse movement operations on the controllers are determined based on the operation data 615 (step S22). That is, the movement direction and the movement amount of the right controller 4 are calculated based on the right mouse operation data 644. Further, the movement direction and the movement amount of the left controller 3 are calculated based on the left mouse operation data 654.

Next, the movement direction and the movement amount of the player object group are determined based on the calculated movement directions and movement amounts of the controllers (step S23). As described above, in the simultaneous movement mode, the movement direction and the movement amount of the player object group are determined by summing the movement directions and the movement amounts of the controllers.

Next, movement control of the player object group is performed based on the determined movement direction and movement amount (step S24).

Next, whether or not a switchover operation from the simultaneous movement mode to the relative movement mode has been performed is determined (step S25). Specifically, whether or not the operation state is changed from a state in which neither the L button nor the R button is pressed to a state in which at least one of the L button and the R button is pressed, is determined based on the operation data 615. As a result of the determination, if a switchover operation to the relative movement mode has been performed (YES in step S25), the relative mode flag 616 is set at ON (step S26). Next, with the present position of the right OBJ 301 used as the movable reference position, the movable range of the right OBJ 301 is determined and stored as the first movable range data 605. Further, the movable range of the left OBJ 302 is determined based on the present position of the left OBJ 302, and is stored as the second movable range data 609 (step S27).

On the other hand, as a result of the determination in step S25, if a switchover operation to the relative movement mode has not been performed (NO in step S25), the processes in steps S26 and S27 are skipped. Then, the simultaneous mode process is ended.

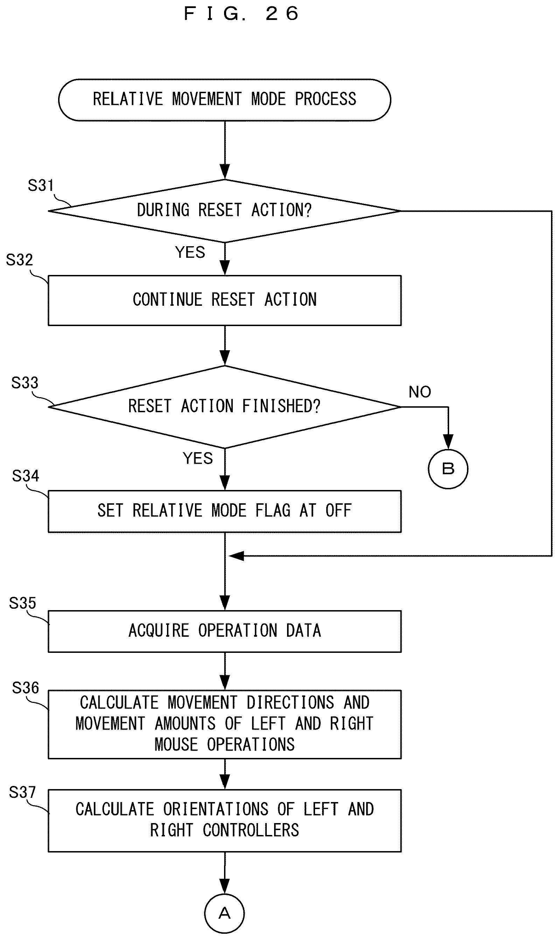

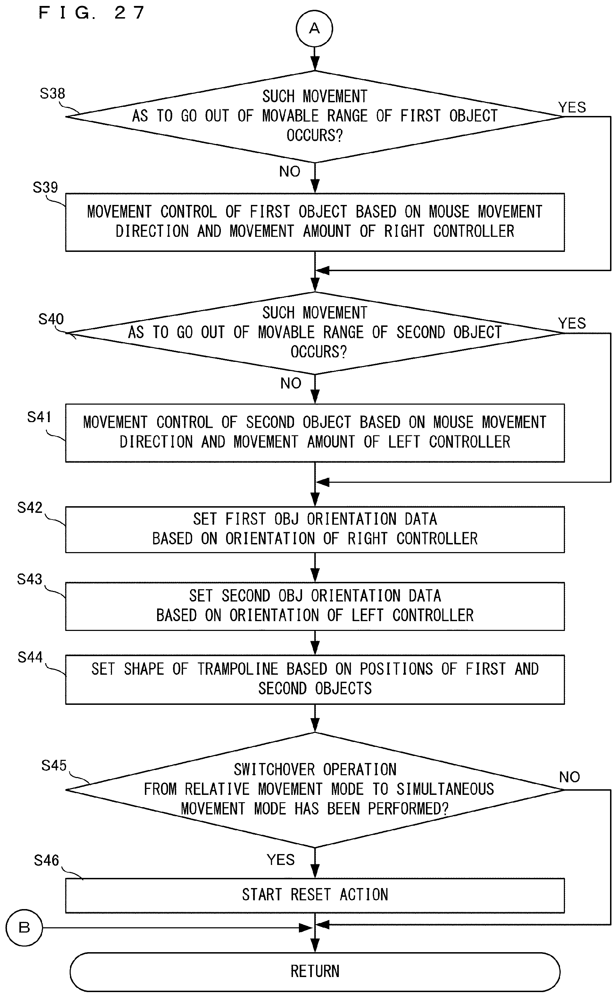

Next, the relative movement mode process will be described. FIG. 26 and FIG. 27 are flowcharts showing the details of the relative movement mode process. In FIG. 26, first, whether or not the player object group is currently performing the "reset action" described above is determined (step S31). As a result of the determination, if the "reset action" is not being performed (NO in step S31), the process proceeds to step S35 described later.

On the other hand, if the "reset action" is being performed (YES in step S31), control for the "reset action" is continued (step S32). That is, reproduction of an animation corresponding to the "reset action" is continued. Next, whether or not the "reset action" is finished is determined (step S33). If the "reset action" is finished (YES in step S33), the relative mode flag 616 is set at OFF (step S34). Then, the process proceeds to step S35. On the other hand, if the reset action is not finished (NO in step S33), the relative movement mode process is ended.

Next, the operation data 615 is acquired (step S35). Next, the contents of mouse movement operations on the controllers are determined based on the operation data 615 (step S36). That is, the movement direction and the movement amount of the right controller 4 are calculated based on the right mouse operation data 644. Further, the movement direction and the movement amount of the left controller 3 are calculated based on the left mouse operation data 654.

Next, the present orientations of the controllers are calculated based on outputs of the inertial sensors (step S37).

Next, in FIG. 27, for the right OBJ 301, whether or not such movement as to go out of the first movable range occurs is determined based on the calculated movement direction and movement amount of the right controller 4 and the first movable range data 605 (step S38). As a result of the determination, if such movement as to go out of the first movable range does not occur (NO in step S38), the right OBJ 301 is subjected to movement control based on the movement direction and the movement amount of the right controller 4 (step S39). On the other hand, if such movement as to go out of the first movable range occurs (YES in step S38), step S39 is skipped. That is, control is performed so that such movement as to go out of the first movable range is not performed.

Next, for the left OBJ 302, whether or not such movement as to go out of the second movable range occurs is determined based on the calculated movement direction and movement amount of the left controller 3 and the second movable range data 609 (step S40). As a result of the determination, if such movement as to go out of the second movable range does not occur (NO in step S40), the left OBJ 302 is subjected to movement control based on the movement direction and the movement amount of the left controller 3 (step S41). On the other hand, if such movement as to go out of the second movable range occurs (YES in step S40), step S41 is skipped. That is, control is performed so that such movement as to go out of the second movable range is not performed.

Next, the first OBJ orientation data 604 is set based on the calculated orientation of the right controller 4 (step S42). Further, the second OBJ orientation data 608 is set based on the calculated orientation of the left controller 3 (step S43). That is, processing of reflecting the orientations of the controllers in the orientations of the left and right objects is executed.

Next, the shape of the trampoline 303 is calculated based on the present positions of the right OBJ 301 and the left OBJ 302, and is set as the first mode shape data 614 (step S44). That is, processing of changing the shape of the trampoline 303 in accordance with the positions of the right OBJ 301 and the left OBJ 302 is performed.

Next, whether or not a switchover operation from the relative movement mode to the simultaneous movement mode has been performed is determined (step S45). Specifically, whether or not the operation state is changed from a state in which at least one of the L button and the R button is pressed to a state in which neither the L button nor the R button is pressed, is determined based on the operation data 615. As a result of the determination, if a switchover operation to the simultaneous movement mode has been performed (YES in step S45), the center position of the trampoline 303 is determined as the initial reference position, and control for the "reset action" as described above is started (step S46).

On the other hand, as a result of the determination, if a switchover operation to the simultaneous movement mode has not been performed (NO in step S45), the process in step S46 is skipped. Then, the first mode process is ended.

Returning to FIG. 24, next, various action controls for the third object 304 are performed. Along with this, collision detection between the third object and various objects is performed, and various processes based on the detection results are also performed as appropriate (step S5). For example, if the third object 304 collides with the trampoline 303, a movement trajectory through which the third object 304 moves while bouncing is calculated, and movement control along the trajectory is performed. If the third object 304 collides with the ground, processing of causing the third object 304 to disappear is executed. If the third object 304 has landed on the goal platform, processing of adding a score is executed.

Next, a game image in which the results of the various processes described above are reflected is generated and outputted (step S6).

Next, whether or not a condition for ending the game processing is satisfied is determined (step S7). If the condition is not satisfied (NO in step S7), the process returns to step S1 and the process is repeated. If the condition is satisfied (YES in step S7), the game processing is ended.

As described above, in the exemplary embodiment, the left controller 3 and the right controller 4 are used as mice, and the left OBJ 302 and the right OBJ 301 can be moved through mouse movement operations of the respective controllers. Here, while the left OBJ 302 and the right OBJ 301 are being moved through mouse movement operations of the left controller 3 and the right controller 4, if the right controller (right hand) is located on the left side relative to the left controller (left hand) or if the right OBJ 301 is located on the left side relative to the left OBJ 302, the user might be confused about operations. In view of the above, in the exemplary embodiment, when a switchover operation for the movement mode is performed in the first movement mode, control is performed so that the positional relationship between the left OBJ 302 and the right OBJ 301 becomes the initial positional relationship. Thus, the user can be prevented from being confused about operations using two mice. In addition, even if the user is confused, the confusion can be easily eliminated.

### [Modifications]

The above processing may be applied to game processing configured such that a virtual object present on the right side cannot be moved to the left side relative to a virtual object located on the left side. For example, the above processing may be applied to a game in which only movement control in the relative movement mode is used without using the simultaneous movement mode described in the above exemplary embodiment.

As another example, the above processing may be applied to a rhythm game. In the rhythm game, a user can operate an expandable and contractable area corresponding to the trampoline 303. Then, for example, two types of notes which are "score notes" and "obstacle notes" come flowing from all directions in accordance with the rhythm of a predetermined BGM or the like. The user adjusts the size and the direction of the expandable and contractable area through operations of the left and right controllers so that a "score note" passes through the area and an "obstacle note" does not pass through the area. Also in such a game, operation confusion and the like can be prevented by applying the above processing.

As another example, the above processing may be applied to an action game that is played on a screen based on a look-down viewpoint. Specifically, the above processing may be applied to an action game in which one user operates two player characters through mouse operations of the left and right controllers. More specifically, for example, a user operates a first player character through a mouse operation of the left controller 3, and operates a second player character through a mouse operation of the right controller 4. The first and second player characters may be movable without being limited. An object like the trampoline 303 as described above may not necessarily be present between the first and second player characters. For example, in a case such as when the positions of the two player characters are far away from each other, control may be performed so that the second player character instantaneously transfers to a predetermined position on the right side of the first player character by a predetermined button operation being performed.

A switchover operation for the movement mode is not limited to the above operation. For example, it may be determined that a switchover operation from the relative movement mode to the simultaneous movement mode has been performed, upon detection that a predetermined button is pressed or continues to be pressed, a predetermined operation is performed by a stick, a surface of a controller where a mouse sensor is present gets off the working surface, the movement speed per unit time of a controller becomes equal to or greater than a predetermined speed, a controller is swung, or the like. As another example, in a state in which a predetermined menu is opened, when an item "switch movement mode" is selected on the menu, the movement mode may be switched.

Regarding calculation of the movement amount of the player object group in the simultaneous movement mode, for example, in a case of moving the player object group in a certain direction, the movement amount may be determined using another calculation method that can provide such a result that the movement amount is greater when both controllers are moved in the direction than when only one of the left and right controllers is moved in the direction. For example, the mouse movement amount of the right controller 4 may be multiplied by a certain proportion of the mouse movement amount of the left controller 3. As another example, the mouse movement amount of only one controller may be always used, or only the mouse movement amount of the controller that has the greater movement amount may be used.

As control corresponding to the "reset action", the following control may be performed. For example, in a virtual world, a predetermined position may be set as a fixed initial reference position, and the right OBJ and the left OBJ may be moved so as to be located at the left and the right of the initial reference position. In addition, for example, using, as a reference, the position of the right OBJ when a switchover operation for the movement mode is performed, the left OBJ may be controlled to be moved to the left side of the right OBJ. Alternatively, using, as a reference, the position of the left OBJ when a switchover operation for the movement mode is performed, the right OBJ may be moved.

Regarding the movable ranges in the relative movement mode, one movable range may be shared, instead of setting movable ranges respectively for the left OBJ and the right OBJ. For example, in the case of the trampoline game as described above, a circular area having a predetermined size with the center position of the trampoline 303 set as the center of a movable range may be used as a common movable range for the left OBJ 302 and the right OBJ 301. In any case, an appropriate range can be set as a movable range for the right OBJ 301 and the left OBJ 302 in accordance with the game content.

In the above exemplary example, the game in which the shape of a virtual object which is the trampoline 303 is deformed has been shown. As another example, a deformation target may be an area demarcating a virtual space. In the above game example, control of bouncing the third object 304 is performed as an effect when the third object 304 and the trampoline 303 collide with each other. In this regard, in another exemplary embodiment, depending on the content of the game, when the third object 304 and a predetermined area corresponding to the trampoline 303 are in a predetermined positional relationship, various in-game effects corresponding to the game content may be exerted.

In the above game example, the trampoline 303 is deformed based on the positions of both of the right OBJ 301 and the left OBJ 302. In another exemplary embodiment, control may be performed so that the trampoline 303 is deformed based on only one of their positions.

Targets operated by the left and right controllers are not limited to virtual objects described above. For example, in the case of the trampoline game, two pointers indicating parts of the outer circumference of the trampoline 303 may be operation targets of the left and right controllers.

In another exemplary embodiment, control for fixing the shape of a deformed target may be performed in the relative movement mode. For example, in the case of the trampoline game, through predetermined operations, the right OBJ 301 and the left OBJ 302 are caused to hammer fixation tools such as tent pegs to the trampoline 303, thus setting fixation points, whereby the trampoline 303 can be extended into a more complicated shape with the fixation points increased. Also in this case, when an operation for returning to the initial positional relationship is performed, control may be performed so as to move the right OBJ 301 and the left OBJ 302 into the initial positional relationship while returning the shape of the trampoline 303.

In the above exemplary embodiments, the case where the above processing is executed by a single information processing apparatus 2 has been described. The information processing apparatus 2 may include a plurality of storages and processors. Then, the above processing may be executed while being shared by these components. The information processing apparatus may be a server, and the above processing may be executed in a distributed system composed of a plurality of information processing apparatuses including at least one server.

In another exemplary embodiment, the main body apparatus 2 may be an information processing apparatus such as a smartphone, a tablet terminal, a personal computer, or a wearable terminal. The main body apparatus 2 may be configured without having the display 12.

The configurations of the controllers described above are merely an example, and the shapes thereof are not limited to the above shapes and may be other shapes. The controllers may be controllers that are not attachable and detachable to and from the main body apparatus 2. The types and the numbers of the input sections are not limited to the above ones. For example, only one of the controllers may have only either the buttons or the direction input section. The controllers are not limited to one set of two controllers. The controllers may be general-purpose mice, and the above processing may be applied to processing using such mice.

The above processing may be applied to other information processing, instead of game processing. For example, the above processing may be applied to information processing for drawing.

While the present disclosure has been described herein, it is to be understood that the above description is, in all aspects, merely an illustrative example, and is not intended to limit the scope thereof. It is to be understood that various modifications and variations can be made without deviating from the scope of the present disclosure.

## Claims

1. A computer-implemented game processing method comprising:
acquiring, from a first controller (4) configured to be held by a right hand of a user and having a first mouse sensor, first data (641) including first mouse sensor data based on an output of the first mouse sensor;
acquiring, from a second controller (3) configured to be held by a left hand of the user and having a second mouse sensor, second data including second mouse sensor data (654) based on an output of the second mouse sensor;
moving a first virtual object (301), based on the first mouse sensor data;
moving a second virtual object (302), based on the second mouse sensor data; and
moving at least one of the first virtual object and the second virtual object to a position in which the first virtual object is located to the right of the second virtual object, thereby forming a first positional relationship, based on at least one of the first data or the second data.

2. The computer-implemented game processing method according to claim 1, wherein
at least one of the first controller and second controller includes at least one of a button or a direction input section,
at least one of the first data or the second data includes button data based on the button being pressed or direction input section data based on the direction input section being operated, and
at least one of the first virtual object and the second virtual object is moved to the position that makes the first positional relationship, based on the button data or the direction input section data.

3. The computer-implemented game processing method according to claim 1, comprising:
switching between
a first movement mode in which the first virtual object and the second virtual object are movable relative to each other, and
a second movement mode in which the first virtual object and the second virtual object are moved while maintaining a second positional relationship between them, based on at least one of the first mouse sensor data and the second mouse sensor data.

4. The computer-implemented game processing method according to claim 3, wherein
the first positional relationship and the second positional relationship are the same positional relationship.

5. The computer-implemented game processing method according to claim 3, comprising:
calculating a movement amount of the first virtual object and the second virtual object in the second movement mode so that the movement amount becomes greater when calculated based on both of the first mouse sensor data and the second mouse sensor data than when calculated based on either the first mouse sensor data or the second mouse sensor data.

6. The computer-implemented game processing method according to claim 5, comprising:
in the second movement mode, calculating a movement direction and the movement amount of the first virtual object and the second virtual object as sums of those calculated respectively from the first mouse sensor data and the second mouse sensor data.

7. The computer-implemented game processing method according to claim 3, wherein
in the first movement mode, each of the first virtual object and the second virtual object is movable in a predetermined range with a predetermined position as a reference position.

8. The computer-implemented game processing method according to claim 3, comprising:
in the first movement mode, deforming a predetermined area in accordance with a position of at least one of the first virtual object and the second virtual object; and
in the second movement mode, moving the predetermined area together with the first virtual object and the second virtual object.

9. The computer-implemented game processing method according to claim 8, comprising:
exerting a predetermined in-game effect when the predetermined area and a third virtual object are in a predetermined positional relationship.

10. The computer-implemented game processing method according to any one of claims 1 to 9, wherein
movement controls of the first virtual object and the second virtual object based on the first mouse sensor data and the second mouse sensor data are temporarily restricted while at least one of the first virtual object and the second virtual object is being moved to the position that makes the first positional relationship.

11. An information processing system comprising means for carrying out the method according to any one of claims 1 to 10.

12. A game program comprising instructions which, when the program is executed by a computer, cause the computer to carry out the method according to any one of claims 1 to 10.
